# DEMANDE DE BREVET EUROPEEN

(11) **EP 4 035 935 A1**
(43) Date de publication de la demande: **03.08.2022**
(21) Numéro de dépôt: 22154335.8
(22) Date de dépôt: 31.01.2022
(51) Int. Cl.: B60L 58/33, B60L 50/70

(54) **VÉHICULE FERROVIAIRE COMPRENANT UNE PILE À COMBUSTIBLE ET UN RÉSERVOIR D' HYDROGÈNE LIQUIDE**

(30) Priorité: 01.02.2021 FR 2100945
(71) Demandeur: ALSTOM Holdings, 93400 Saint-Ouen-sur-Seine (FR)
(72) Inventeur: CHIARANDINI, Bruno, 90000 Belfort (FR)
(74) Mandataire: Lavoix

(57) **Abrégé**

Véhicule ferroviaire (10) comprenant :
- au moins une pile à combustible (12) adaptée pour produire une énergie électrique (14) à partir d'au moins un flux d'hydrogène gazeux (16),
- au moins un réservoir (18) conçu pour contenir de l'hydrogène liquide (20), et un évaporateur (22) configuré pour produire le flux d'hydrogène gazeux à partir d'un flux d'hydrogène liquide (24) en provenance du réservoir,
- un circuit de refroidissement (26) pour refroidir la pile à combustible, et
- une source de chaleur (28) configurée pour fournir de la chaleur (30) à l'évaporateur pour évaporer le flux d'hydrogène liquide.

## Description

La présente invention concerne un véhicule ferroviaire comprenant une pile à combustible alimentée par de l'hydrogène gazeux pour produire de l'énergie électrique.

L'invention concerne également un procédé mettant en oeuvre un tel véhicule ferroviaire.

L'énergie électrique sert notamment à alimenter au moins un moteur électrique du véhicule ferroviaire.

Dans ce genre de véhicule ferroviaire, l'hydrogène gazeux est contenu dans un réservoir à haute pression pour minimiser l'encombrement du réservoir. En pratique, la pression maximale permise par les normes en vigueur, ainsi que la place disponible dans le véhicule ferroviaire pour le réservoir, limitent la quantité d'hydrogène gazeux stocké dans le réservoir, avec un impact négatif sur l'autonomie en électricité du véhicule ferroviaire.

Un but de l'invention est d'augmenter cette autonomie.

A cet effet, l'invention a pour objet un véhicule ferroviaire comprenant :
- au moins une pile à combustible adaptée pour produire une énergie électrique à partir d'au moins un flux d'hydrogène gazeux,
- au moins un réservoir conçu pour contenir de l'hydrogène liquide, et un évaporateur configuré pour produire le flux d'hydrogène gazeux à partir d'un flux d'hydrogène liquide en provenance du réservoir,
- un circuit de refroidissement pour refroidir la pile à combustible, et
- une source de chaleur configurée pour fournir de la chaleur à l'évaporateur pour produire le flux d'hydrogène gazeux.

Selon des modes particuliers de réalisation, le véhicule ferroviaire comprend l'une ou plusieurs des caractéristiques suivantes, prise(s) isolément ou selon toutes les combinaisons techniquement possibles :
- la source de chaleur comprend une portion du circuit de refroidissement ;
- le circuit de refroidissement comprend au moins un échangeur de chaleur et est adapté pour envoyer un premier flux de fluide refroidi dans la pile à combustible, la pile à combustible étant adaptée pour chauffer le premier flux et produire un deuxième flux de fluide réchauffé, l'évaporateur étant adapté pour recevoir au moins une partie du deuxième flux et pour produire un troisième flux de fluide semi-refroidi, le circuit de refroidissement étant configuré pour produire le premier flux à partir d'au moins le troisième flux ;
- la source de chaleur comprend un chauffage électrique ;
- le véhicule ferroviaire comprend une source d'électricité auxiliaire distincte de la pile à combustible et configurée pour alimenter électriquement le chauffage électrique ;
- le réservoir comprend une double peau, et un isolant thermique situé entre deux peaux de la double peau ;
- le réservoir contient de l'hydrogène liquide, et un ciel gazeux comprenant de l'hydrogène, le ciel gazeux ayant une pression comprise entre 2 et 4 bars absolus ;
- le ciel gazeux a une pression comprise entre 2,5 et 3,5 bars absolus ; et
- le véhicule ferroviaire comprend : au moins un convertisseur statique comportant une entrée reliée électriquement à la pile à combustible pour recevoir au moins une partie de l'énergie électrique et une sortie adaptée pour fournir une énergie électrique transformée ; et au moins un moteur électrique relié électriquement à la sortie du convertisseur statique pour recevoir au moins une partie de l'énergie électrique transformée.

L'invention a aussi pour objet un procédé mettant en œuvre un véhicule ferroviaire tel que décrit ci-dessus, et comprenant les étapes suivantes :
- production d'une énergie électrique par la pile à combustible à partir du flux d'hydrogène gazeux,
- production du flux d'hydrogène gazeux par l'évaporateur à partir du flux d'hydrogène liquide provenant du réservoir,
- refroidissement de la pile à combustible par le circuit de refroidissement, et
- fourniture de chaleur à l'évaporateur par la source de chaleur et évaporation du flux d'hydrogène liquide.

L'invention sera mieux comprise à la lecture de la description qui va suivre, donnée uniquement à titre d'exemple et faite en se référant aux dessins annexés, sur lesquels :
- la figure 1 est une vue schématique d'un véhicule ferroviaire selon l'invention, et
- la figure 2 est une vue schématique d'une variante selon l'invention du véhicule ferroviaire représenté sur la figure 1.

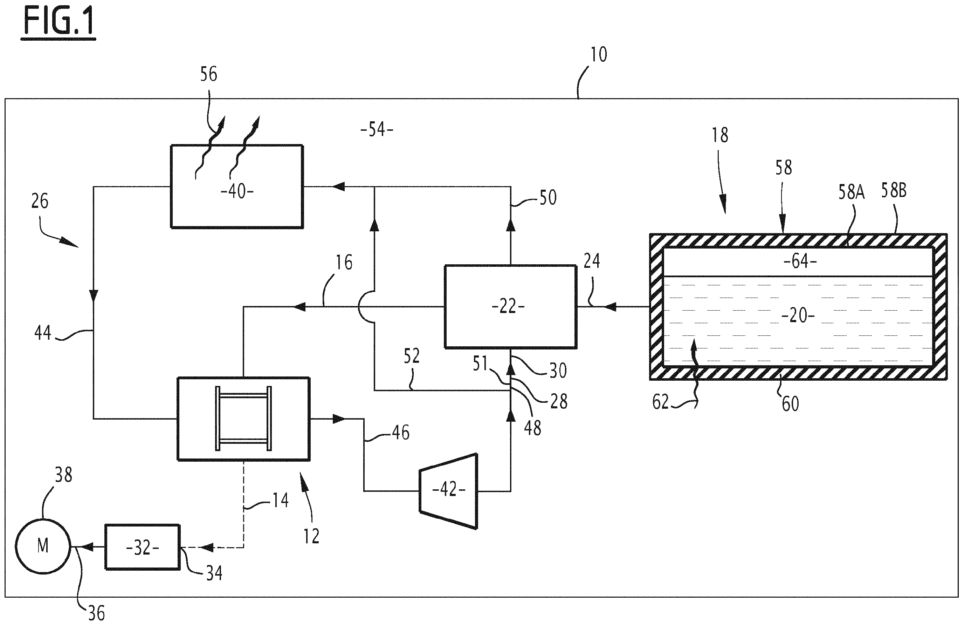

En référence à la figure 1, on décrit un véhicule ferroviaire 10 selon l'invention.

Le véhicule ferroviaire 10 comprend au moins une pile à combustible 12 adaptée pour produire une énergie électrique 14 à partir d'au moins un flux d'hydrogène gazeux 16. Le véhicule ferroviaire 10 comprend au moins un réservoir 18 conçu pour contenir de l'hydrogène liquide 20, et un évaporateur 22 configuré pour produire le flux d'hydrogène gazeux 16 à partir d'un flux d'hydrogène liquide 24 en provenance du réservoir 18. Le véhicule ferroviaire 10 comprend un circuit de refroidissement 26 pour refroidir la pile à combustible 12 et une source de chaleur 28 configurée pour fournir de la chaleur 30 à l'évaporateur 22 pour évaporer le flux d'hydrogène liquide 24.

Avantageusement, le véhicule ferroviaire 10 comprend au moins un convertisseur statique 32 comportant une entrée 34 reliée électriquement à la pile à combustible 12 pour recevoir au moins une partie de l'énergie électrique 14 produite par la pile à combustible 12 et une sortie adaptée pour fournir une énergie électrique transformée 36. Par exemple, le véhicule ferroviaire 10 comprend au moins un moteur électrique 38 relié électriquement au convertisseur statique 32 pour recevoir au moins une partie de l'énergie électrique transformée 36.

Par « hydrogène », on entend ici en fait du dihydrogène (H₂).

Le circuit de refroidissement 26 comprend par exemple au moins un échangeur de chaleur 40 et une pompe 42. Le circuit de refroidissement 26 est avantageusement adapté pour envoyer un premier flux 44 de fluide refroidi dans la pile à combustible 12, la pile à combustible étant adaptée pour chauffer le premier flux 44 et produire un deuxième flux 46 de fluide réchauffé.

L'évaporateur 22 est adapté pour recevoir au moins une partie 48 du deuxième flux 46 et pour produire un troisième flux 50 de fluide semi-refroidi, le circuit de refroidissement 26 étant configuré pour produire le premier flux 44 à partir d'au moins le troisième flux 50. Dans l'exemple, la source de chaleur 28 est formée par la partie 48 du deuxième flux 46, c'est-à-dire par une portion 51 du circuit de refroidissement 26.

Dans l'exemple représenté, le circuit de refroidissement 26 est configuré pour qu'une autre partie 52 du deuxième flux 46 ne soit pas reçue dans l'évaporateur 22 mais envoyée directement dans l'échangeur de chaleur 40.

Le fluide du premier flux 44 et du deuxième flux 46 est par exemple de l'eau.

L'échangeur de chaleur 40 est avantageusement adapté pour refroidir le troisième flux 50 et l'éventuelle autre partie 52 du deuxième flux 46. Par exemple, l'échangeur de chaleur 40 est adapté pour dissiper dans l'air ambiant 54 de la chaleur 56 contenue dans le troisième flux 50 et l'éventuelle autre partie 52.

La pompe 42 est par exemple située fluidiquement entre la pile à combustible 12 et l'évaporateur 22, dans l'exemple en amont de la division du deuxième flux 46 en la partie 48 et l'autre partie 52. La pompe 42 est adaptée pour faire circuler le fluide de refroidissement dans le circuit de refroidissement 26.

Le réservoir 18 comprend avantageusement une double peau 58, et un isolant thermique 60 situé entre deux peaux 58A, 58B de la double peau 58.

Par isolant thermique, on entend ici tout matériau qui, par sa présence, diminue le flux de chaleur 62 global entre l'air ambiant 54 et le contenu du réservoir 18. L'isolant thermique est par exemple formé par une ou plusieurs couche(s) de matériau(x) isolant(s) réalisant en outre avantageusement la tenue mécanique de la peau 58B intérieure.

Outre l'hydrogène liquide 20, le réservoir 18 contient par exemple un ciel gazeux 64 comprenant de l'hydrogène.

Le ciel gazeux 64 a avantageusement une pression comprise entre 2,0 et 4,0 bars absolus, de préférence entre 2,5 et 3,5 bars absolus, et par exemple d'environ 3,0 bars absolus.

L'hydrogène liquide 20 et le ciel gazeux 64 ont par exemple une température d'environ 20K.

Le fonctionnement du véhicule ferroviaire 10 découle de sa structure. Il va maintenant être brièvement décrit et illustre un procédé selon l'invention

L'énergie électrique 14 est produite par la pile à combustible 12 à partir du flux d'hydrogène gazeux 16, qui est produit par l'évaporateur 22 à partir du flux d'hydrogène liquide 24 provenant du réservoir 18.

La pile à combustible 12 est refroidie par le circuit de refroidissement 26. Plus précisément, le premier flux 44, refroidi dans l'échangeur 40, entre dans la pile à combustible 12, et en ressort sous la forme du deuxième flux 46 plus chaud.

La source de chaleur 28, ici la partie 48 du deuxième flux 46 en provenance de la pile à combustible 12, fournit la chaleur 30 à l'évaporateur 22 pour évaporer le flux d'hydrogène liquide 24 et obtenir le flux d'hydrogène gazeux 16. Ainsi, tout ou partie de la chaleur fatale de la pile à combustible 12 est utilisée pour vaporiser le flux d'hydrogène liquide 24.

L'énergie électrique 14 est avantageusement transformée par le convertisseur statique 32 en l'énergie électrique transformée 36, qui alimente le moteur électrique 38.

Grâce aux caractéristiques décrites ci-dessus, notamment le réservoir 18 conçu pour stocker l'hydrogène liquide 20, la quantité d'hydrogène disponible est augmentée par rapport à un réservoir d'hydrogène gazeux. Par exemple, au lieu de stocker environ 350 kg d'hydrogène à haute pression, il devient possible de stocker environ 1200 kg d'hydrogène dans le même espace.

Grâce au réservoir 18, l'hydrogène liquide 20 peut être stocké pendant environ 100 heures. Avantageusement, aucun apport de froid n'est nécessaire. Le réservoir 18 est avantageusement adapté pour être rempli à partir d'une station, *a priori* fixe, de distribution d'hydrogène liquide (non représentée).

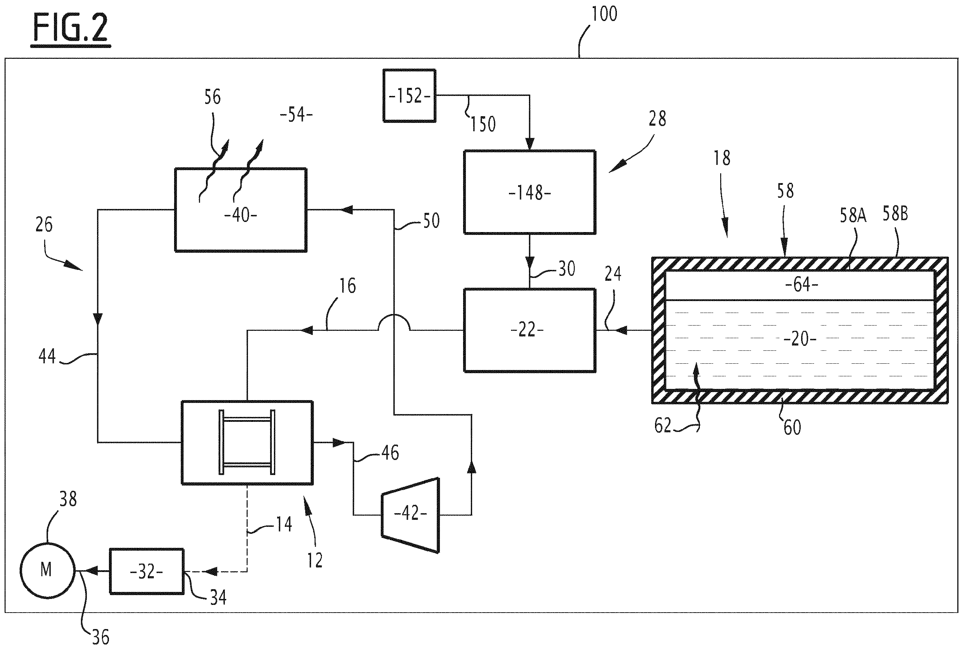

En référence à la figure 2, on décrit un véhicule ferroviaire 100 constituant une variante du véhicule ferroviaire 10. Le véhicule ferroviaire 100 est analogue au véhicule ferroviaire 10 représenté sur la figure 1. Les éléments similaires portent la même référence numérique et ne seront pas décrits à nouveau. Seules les différences seront décrites en détail ci-après.

Dans le véhicule ferroviaire 100, la chaleur 30 servant à vaporiser le flux d'hydrogène liquide 24 en le flux d'hydrogène gazeux 16 est fournie par un chauffage électrique 148 du véhicule ferroviaire 100. Dit autrement, la source de chaleur 28 qui fournit la chaleur 30 à l'évaporateur 22 n'est plus une portion 51 du circuit de refroidissement 26, mais le chauffage électrique 148.

Le chauffage électrique 148 est alimenté en électricité 150 par une source d'électricité auxiliaire 152 du véhicule ferroviaire 100, distincte de la pile à combustible 12.

Le deuxième flux 46 est intégralement envoyé dans l'échangeur de chaleur 40 en vue d'être refroidi pour former le premier flux 44.

Selon une autre variante encore (non représentée), le véhicule ferroviaire est adapté pour que l'évaporateur 22 reçoive la chaleur 30 du circuit de refroidissement 26 (comme dans le véhicule ferroviaire 10) et/ou, sélectivement, du chauffage électrique 148 (comme dans le véhicule ferroviaire 100). La source de chaleur 28 est alors « mixte ».

## Revendications

1. Véhicule ferroviaire (10 ; 100) comprenant :
- au moins une pile à combustible (12) adaptée pour produire une énergie électrique (14) à partir d'au moins un flux d'hydrogène gazeux (16),
- au moins un réservoir (18) conçu pour contenir de l'hydrogène liquide (20), et un évaporateur (22) configuré pour produire le flux d'hydrogène gazeux (16) à partir d'un flux d'hydrogène liquide (24) en provenance du réservoir (18),
- un circuit de refroidissement (26) pour refroidir la pile à combustible (12), et
- une source de chaleur (28) configurée pour fournir de la chaleur (30) à l'évaporateur (22) pour produire le flux d'hydrogène gazeux (16).

2. Véhicule ferroviaire (10) selon la revendication 1, dans lequel la source de chaleur (28) comprend une portion (51) du circuit de refroidissement (26).

3. Véhicule ferroviaire (10) selon la revendication 2, dans lequel le circuit de refroidissement comprend au moins un échangeur de chaleur (40) et est adapté pour envoyer un premier flux (44) de fluide refroidi dans la pile à combustible (12), la pile à combustible (12) étant adaptée pour chauffer le premier flux (44) et produire un deuxième flux (46) de fluide réchauffé, l'évaporateur (22) étant adapté pour recevoir au moins une partie (48) du deuxième flux (46) et pour produire un troisième flux (50) de fluide semi-refroidi, le circuit de refroidissement étant configuré pour produire le premier flux (44) à partir d'au moins le troisième flux (50).

4. Véhicule ferroviaire (100) selon la revendication 1, dans lequel la source de chaleur (28) comprend un chauffage électrique (148).

5. Véhicule ferroviaire (100) selon la revendication 4, comprenant en outre une source d'électricité auxiliaire (152) distincte de la pile à combustible (12) et configurée pour alimenter électriquement le chauffage électrique (148).

6. Véhicule ferroviaire (10 ; 100) selon l'une quelconque des revendications 1 à 5, dans lequel le réservoir (18) comprend une double peau (58), et un isolant thermique (60) situé entre deux peaux (58A ; 58B) de la double peau (58).

7. Véhicule ferroviaire (10 ; 100) selon l'une quelconque des revendications 1 à 6, dans lequel le réservoir (18) contient de l'hydrogène liquide (20), et un ciel gazeux (64) comprenant de l'hydrogène, le ciel gazeux (64) ayant une pression comprise entre 2 et 4 bars absolus.

8. Véhicule ferroviaire (10 ; 100) selon la revendication 7, dans lequel le ciel gazeux (64) a une pression comprise entre 2,5 et 3,5 bars absolus.

9. Véhicule ferroviaire (10 ; 100) selon l'une quelconque des revendications 1 à 8, comprenant en outre :
- au moins un convertisseur statique (32) comportant une entrée (34) reliée électriquement à la pile à combustible (12) pour recevoir au moins une partie de l'énergie électrique (14) et une sortie adaptée pour fournir une énergie électrique transformée (36), et
- au moins un moteur électrique (38) relié électriquement à la sortie du convertisseur statique pour recevoir au moins une partie de l'énergie électrique transformée (36).

10. Procédé mettant en œuvre un véhicule ferroviaire (10; 100) selon l'une quelconque des revendications 1 à 9, comprenant les étapes suivantes :
- production d'une énergie électrique (14) par la pile à combustible (12) à partir du flux d'hydrogène gazeux (16),
- production du flux d'hydrogène gazeux (16) par l'évaporateur (22) à partir du flux d'hydrogène liquide (24) provenant du réservoir (18),
- refroidissement de la pile à combustible (12) par le circuit de refroidissement (26), et
- fourniture de chaleur (30) à l'évaporateur (22) par la source de chaleur (28) et évaporation du flux d'hydrogène liquide (24).
